Europäisches Patentamt

European Patent Office

Office européen des brevets

(19)

(11) Publication number: **0 315 425**
**A2**

# EUROPEAN PATENT APPLICATION

(12)

(21) Application number: **88310295.6**

(22) Date of filing: **02.11.88**

(51) Int. Cl.⁴: **G 06 F 15/40**

(30) Priority: **06.11.87 US 118492**

(43) Date of publication of application:
**10.05.89 Bulletin 89/19**

(84) Designated Contracting States: **DE FR GB**

(71) Applicant: **XEROX CORPORATION**
**Xerox Square - 020**
**Rochester New York 14644 (US)**

(72) Inventor: **Swinehart, Daniel C.**
**371 Ferne Avenue**
**Palo Alto California 94306 (US)**

**Terry, Douglas B.**
**3324 Brittan Street no 1**
**San Carlos California 94072 (US)**

(74) Representative: **Weatherald, Keith Baynes et al**
**Rank Xerox Limited Patent Department 364 Euston Road**
**London NW1 3BL (GB)**

(54) **Distributed computer system,.**

(57) Embedded references to uniquely-named, piece table style, persistent data structures are employed to give workstation users within a distributed computing environment controlled access to shared non-textual media files, such as digital voice, music, scanned image or video files, without requiring any duplication or movement of such files. A new piece table with a unique identification is entered into a reference database each time a new non-textual media file is recorded to identify such file by name and length. Users may employ their workstations to edit existing piece tables to create and enter into the reference database additional piece tables referring to one or more specified intervals of one or more of the existing non-textual media files, without requiring any duplication or movement of any part of any of those files. Name references to these piece tables may be embedded in ordinary text files and messages to give users access to the underlying non-textual media files.

FIG. 1

## Description

This invention relates to distributed digital computer systems (including systems having heterogeneous operating environments) and, more particularly, to methods and means for (1) enabling users of such systems to create, manipulate, share and make virtually unrestricted use of data intensive files, such as digital voice and music files, "scanned-in" image files, and animated or full motion video files, while (2) avoiding the need for making, storing and handling multiple copies of such files, and (3) reclaiming storage space allocated to such files when they are no longer needed.

Traditional distributed computer systems have limited users to alphanumeric and simple graphics communications (collectively referred to herein as "textual communications"), even though voice, video and even musical media frequently are more efficient and effective for interpersonal communications. Others have recognized the need to extend such systems sufficiently to support non-textual communications as an alternative or supplement to textual communications. For example, substantial effort and expense have been devoted to the development of voice message systems, as well as to the development of multi-media systems for annotating text with voice. Voice is the non-textual communication medium that has been most widely investigated for use in distributed computer systems, so this invention will be described in that context to provide a representative example. Nevertheless, it will be understood that the broader aspects of this invention are also applicable to other types of data intensive, non-textual communications in distributed computing systems.

Several interesting and potentially important advantages flow from treating voice and other non-textual media as data in a distributed computing environment. See Nicholson, "Integrating Voice in the Office World," Byte, Vol. 8, No.12, December 1983, pp. 177-184. It enables non-textual media to be incorporated easily into electronic mail messages, and into annotations applied to ordinary text files, as well as into prompts and other interactive messages provided by the user interface to the computing environment. In short, such a treatment permits users to create, manipulate and share these non-textual data files in much the same way as they handle conventional text files, and enables programmers to implement functions involving such non-textual data files in generally the same way as they implement functions involving text files.

However, voice and other non-textual data files differ significantly from ordinary textual data files. For example, classical workstations cannot record or play voice data files in analog form, so special devices are needed for that purpose. Even more significantly, voice data files typically are much larger than text files containing the identical words. Indeed, the recording of standard telephone quality, uncompacted voice consumes roughly 64k bits of storage per second, which is several orders of magnitude greater than the storage capacity required for an equivalent passage of typed text. Still another factor to be taken into account is that there are stringent real time requirements on transferring voice because unintended pauses or chopping of words during the playback of voice creates a perceptual problem that may interfere with or even defeat the effort to communicate.

Users of distributed computer systems sometimes reside in heterogeneous computing environments having diverse network services implemented through the use of different communication protocols. Moreover, traffic between such computing environments may be routed through a variety of common or private carriers which conceivably may involve different path switching schemes. Gateways have been developed for exchanging textual message traffic between heterogeneous environments, so that value and use of non-textual communications in such systems may depend in significant part on the ease with which non-textual communications may be transferred through such gateways.

Others have addressed some of the issues that need to be resolved to carry out voice and similar non-textual communications in distributed computing environments. The Sydis Information Manager utilizes special workstations (called "VoiceStations") for recording, editing and playing back voice. See Nicholson, "Integrating Voice in the Office World," Byte, Vol. 8, No. 12, December 1983, pp. 177-184. Additionally, a system for integrating voice and data for simple workstation applications has been described. See Ruiz, "Voice and Telephone Applications for the Office Workstation," Proceedings 1st International Conference on Computer Workstations, San Jose, Ca., November 1985, pp. 158-163. Speech storage systems having facilities for recording, editing and playing back voice have been proposed. See Maxemchuck, "An Experimental Speech Storage and Editing Facility," Bell System Technical Journal, Vol. 58, No. 9, October 1980, pp. 1383-1395.

Even more to the point, there are systems that enable users to share documents containing embedded references to non-textual media objects residing on a shared file service and for "garbage collecting" those objects to reclaim the storage space allocated to them when there no longer are any documents or document folders containing references to them. See Thomas et al., "Diamond: A Multimedia Message System Built on a Distributed Architecture," Computer, Vol. 18, No. 12, December 1985, pp. 65-78. Systems, such as the Diamond System, which employ textually embedded references to refer to voice, video and other diverse types of non-textual data sometimes are referred to as "hypermedia systems." See Yankelovich et al., "Reading and Writing the Electronic Book," Computer, Vol. 18, No.10, October 1985, pp. 15-50. Unlike most of the other systems that have been proposed, the embedded references used by the Diamond system avoid the need to include copies of the non-textual data files (i.e., voice files) in each document file with which they are associated. However, the simple reference count based garbage collection scheme of the Diamond System is incompatible with permitting references to internally-stored objects to be included in documents or document folders that are stored outside the system.

Interesting prior art relating to the garbage collection of ordinary data files also has been uncovered. The Cambridge File Server requires clients to take an explicit action to prevent files from being garbage collected, because it automatically deletes files that are not accessible from client-updated and server-maintained indices. See Mitchell et al., "A Comparison of Two Network-Based File Servers," Communications of the ACM, Vol. 25, No.4, April 1982, pp. 233-245. Somewhat less relevant, but still interesting as an example of how to build a highly reliable reference server is the system described in Liskov et al., "Highly-Available Distributed Services and Fault Tolerant Distributed Garbage Collection," Proceedings of Symposium on Principles of Distributed Computing, Alberta, Canada, August 1986, pp. 29-39. The garbage collection scheme they envision requires all sites that store references to remotely-stored, shared objects to run a garbage collector locally for purposes of sending information about distributed references to a common reference server.

Also of interest is Terry et al, "Managing Stored Voice in the Etherphone System", ACM Transactions on Computer Systems 6(1): 3-27, February 1988.

At least two issues still have to be resolved. In view of the very large size of most non-textual data files (e.g., voice data files), it is important that a technique be developed for editing those files through the use of simple databases, without requiring that the files be moved, copied, or decrypted (if they are stored in encrypted form), and for describing the results of the editing operations. Also, an improved technique is needed for using simple databases to support a garbage collector for automatically reclaiming storage space allocated to obsolete non-textual data files. The garbage collection issue is addressed in our copending EP application , (Publication No. ) (D/87277), so this application is directed to the creation, manipulation and sharing of hypermedia.

In accordance with the present invention, embedded references to uniquely named, piece table style, persistent data structures are employed to give workstation users within a distributed computing environment controlled access to shared non-textual media files, such as digital voice, music, scanned image or video files, without requiring any duplication or movement of such files. A new piece table with a unique identification is entered into a reference database each time a new non-textual media file is recorded to identify such file by name and length. Users may employ their workstations to edit existing piece tables to create and enter into the reference database additional piece tables referring to one or more specified intervals of one of more of the existing non-textual media files, without requiring any duplication of any part of any of those files. Name references to these piece tables may be embedded in ordinary text files and messages to give users access to the underlying non-textual media files.

Still other features and advantages of this invention will become apparent when the following detailed description is read in conjunction with the attached drawings, in which:

Figure 1 is a schematic illustrating a pair of local area networks which are on command linked by gateways and a communications channel, with the networks being configured in accordance with this invention to support voice communications in addition to ordinary textual communications;

Figure 2 is a workstation screen illustrating a suitable user interface for recording, editing, and playing back voice files;

Figure 3 is a logically layered schematic of a voice manager for a local area network;

Figure 4 is a schematic illustrating the correlation of voice files with the data structures that are used to reference them;

Figure 5 is simplified functional flow diagram of an interest garbage collector;

Figure 6 is a simplified functional flow diagram of a voice rope garbage collector;

Figure 7 is a simplified functional flow diagram of a voice file garbage collector;

Figure 8 is a simplified partial funcional flow diagram for an integrated voice rope/voice file garbage collector, and

Figure 9 is a simplified partial functional flow diagram for an integrated interest/voice rope garbage collector.

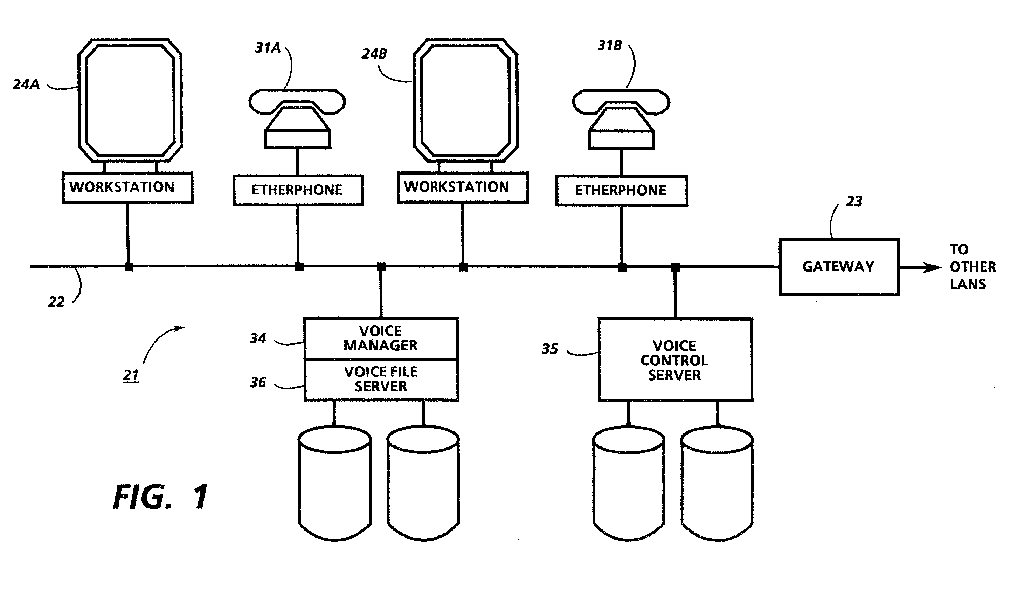

Turning now to the drawings, and at this point especially to Fig. 1, there is a distributed computer system 21 (shown only in relevant part) comprising a local area network ("LAN") 22 with a gateway 23 for interfacing it with another LAN (not shown), directly or possibly via a switched communications facility. In keeping with the usual configuration of CSMA/CD (e.g., Ethernet) networks, the LAN 22 has a linear topology for linking a plurality of workstations 24a and 24b, but it will be evident that it or any other LAN with which it is interfaced may have a different topology, such as a ring-like topology. Still other examples of the heterogeneous environment that may exist given the diverse characteristics of commercially available workstations and LANs will be apparent, so it is to be understood that the gateway 23 performs the reformatting and retiming functions that are required to transfer data from a LAN operating in accordance with one communications protocol to another LAN operating in accordance with a different communications protocol. Additional gateways 23 may be provided if it is desired to extend the system 21 to include still more LANs (not shown).

To enable users to transmit and receive voice messages via the LAN 22 in addition to or in lieu of the usual textual messages and data files that they exchange through their workstations 24a and 24b, there are microprocessor based digital telephone instruments 31a, and 31b, located near, but not physically connected to the workstations 24a, and 24b, respectively. These telephone instruments convert voice into the digital data format required to satisfy the communications protocol of the LAN to which they are connected. For example, the telephone instruments 31a and 31b digitize, packetize and encrypt telephone quality voice for direct transmission over the Ethernet-style LAN 22. For a more detailed description of how that is accomplished, see Swinehart et al., "Adding Voice to an Office Computer Network," Proceedings IEEE GlobeCom '83, November 1983, and Swinehart et al., "An Experimental Environment for Voice System Development, IEEE Office Knowledge Engineering Newsletter, February 1987. As previously pointed out, the telephone instruments 31a and 31b are not directly attached to the workstations 24a and 24b, as like telephone instruments may be used with diverse workstations, such as may exist in a heterogeneous environment.

In keeping with this invention, the system 21 includes a voice manager 34 which is interfaced with the LAN 22 to provide storage for voice, telephone conversations, music, and other sounds recorded at reasonably high fidelity. Other specialized sources of or sinks for sound, such as a text-to-speech converter (not shown) which receives text strings and returns the equivalent voice data file for playback via one or more of the telephone instruments 31a, and 31b may be included within the voice manager 34 if desired.

A voice control server 35 provides control functions similar to those of a conventional business telephone system and manages the interactions between the other components of the system 21 while they are operating on voice. In keeping with its ordinary telephone system functions, the voice control server 35 allows voice-carrying conversations to be established rapidly between two or more users, as well as between any user and a voice file server 36, via the user telephone instruments 31a and 31b the LANs 22 and, when appropriate, the gateway 23. Additionally, when such a conversation is established, the control server 35 distributes a communications path identifier, ConversationID, to all participants in the conversation, including the telephone instruments and the workstations of the users involved therein, as well as to the voice file server 36 if it is activated to record the conversation. As will be seen, this ConversationID is used to identify the conversation in requests and reports that may be issued by the voice control server 35 or the participants subsequent to the conclusion of the conversation.

All of the control required for voice communication, is accomplished via a remote procedure call (RPC) protocol, which preferably is a secure protocol. See for example, Birrell et al., "Implementing Remote Procedure Calls," ACM Transactions on Computer Systems, Vol. 2, No. 1, February 1984, pp. 39-59 and Birrell et al., "Secure Communications Using Remote Procedure Calls," ACM Transactions on Computer Systems, Vol. 3, No. 1, February 1985, pp. 1-14. Multiple implementations of the RPC protocol permit the integration of the workstations 24a and 24b for voice operations, even if they are running programs and executing voice applications programmed using different programming environments. As will be seen, reports issued by the voice control server 35 in response to the RPC's it receives during the course of a conversation, keep the participants informed about the relevant system activities in support of the conversation.

Active participants in a conversation exchange voice using a suitable voice transmission protocol. Again, see the above-identified Swinehart et al. article on, "Adding Voice to an Office Computer Network." During each conversation, all transmitted voice is encoded, preferably using a secure encryption, such as DES electronic-codebook (ECB) encryption, based on a randomly-generated encryption key issued by the voice control server 35. See, for example, National Bureau of Standards, "Data Encryption Standard," Federal Information Processing Standard (FIPs), U.S. Department of Commerce, Publication No. 46, January 1977. This key is distributed to the participants in the conversation in response to RPC's issued by them, thereby enabling their telephone instruments 31a and 31b to decrypt the conversation.

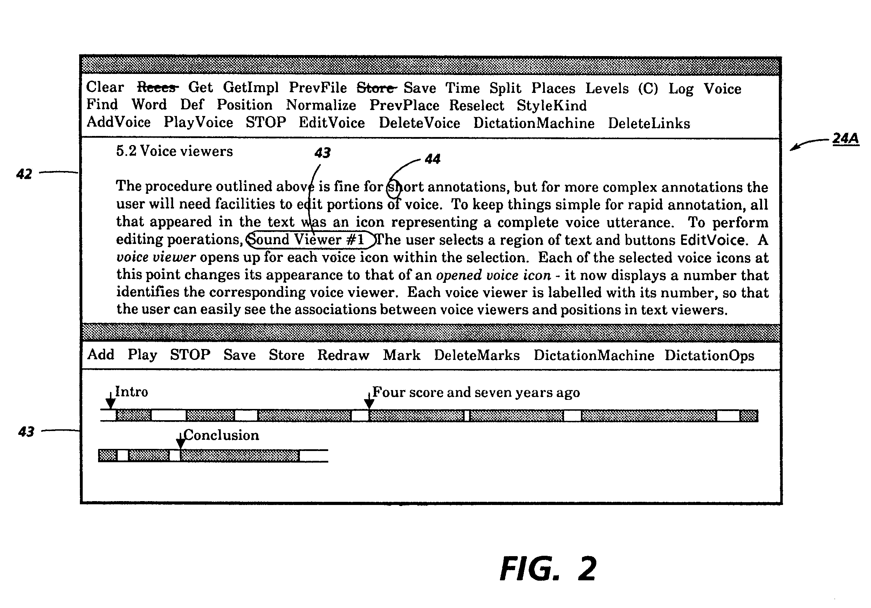

In keeping with one of the more important features of this invention, the workstations 24a, and 24b provide users with enhanced control over the voice capabilities of the system 21. Figure 2 illustrates the screen 41 of a typical workstation, such as the workstation 24a, as it appears when the user has opened two windows 42 and 43, one to view text annotated with references to voice passages as at 42, and the other to view a graphic representation of a given voice passage, as at 43. These voice references typically are indicated by balloon-like icons embedded in the text of the annotated document, as at 44, so that any selected one of the icons may be "opened" to view its graphical representation as at 43 while playing it back and/or editing it. Suitably, the graphic representation of the voice utilizes a linear string of alternate dark and light bars to represent proportionately long intervals of voice and silence. Silence is detected through a thresholding operation when the energy level of the voice drops below a predetermined threshold level, so it will be understood that such term is used herein in its relative sense.

As a prelude to a description of the voice and other sound-editing functions which users can perform through the use of their workstations 24a and 24b, it will be helpful to briefly review the basic RECORD, PLAY and STOP functions which users can invoke. When a user issues a RECORD command, the voice control server 35 issues a conversationID which defines a communication path for connecting the user's telephone instrument to the voice file server 36. The voice manager 34 responds to the ConversationID by allocating storage space on the voice file server 36 for recording a new voice file, VF, and by assigning a unique name, VoiceRopeID, to such voice file. Thereafter, recording continues until the user issues a STOP command. Moreover, while recording is taking place, the voice manager 34 accumulates a count to determine the length of the voice rope, VR, in suitable units of time, such as 1/8000 sec. per unit. In response to the STOP command, all recording or playing operations then in progress or queued for the session identified by the given ConversationID are halted immediately. The PLAY command is similar to the RECORD command, except that it is initiated by a user issuing a VoiceRopeID and a specified interval defining either the entire voice rope or a specified interval of it at a suitable resolution (a resolution of approximately 0.1 ms. in this particular case). The voice control server 35 responds to the PLAY command by issuing a ConversationID to establish a communications path from the voice file server 36 to the users telephone instrument, and the voice manager 34 causes the voice file server 36 to transmit to the user selected interval of the selected VF as determined by the user specified VRs (ID, interval).

Typically, the RECORD and PLAY operations are performed asynchronously with remote procedure calls that return after they have been queued by the voice file server 36. Queued operations generally are performed in order, thereby enabling the voice manager 34 to utilize a straightforward procedure for generating reports to keep users abreast of the status of their requests. For example, the voice manager 34 suitably returns a RequestID when each queued operation is started and completed, thereby enabling it to make calls to each user involved in such an operation, with the calls typically appearing as follows:

REPORT [RequestID, {started/finished/flushed}]

Voice ropes, VR's, identifying recorded voice files, VF's, or portions and combinations thereof are immutable, but can be employed by users to create new immutable VR's through the application of the normal editing functions of their workstations 24a and 24b. To assist with the editing , a DESCRIBE (VoiceRopeID) operation may be invoked to cause the voice manager 34 to return to the workstation of the requestor a list of time intervals that denote the non-silent talkspurts (as used herein, a "talkspurt" is a sequence of voice samples bounded by a predetermined minimum interval of silence) of the specified VR. This talkspurt list, in turn, is employed to generate the graphical representation of the talkspurts and intervening intervals of silence of the selected VR, as shown in window 43 of Fig. 2. Preferably, a look-up table of the talkspurts associated with all of the voice files, VF's, recorded on the voice file server 36 is maintained to reduce the overload involved in assembling the talkspurt list for a given voice rope.

The conventional text editing functions that can be applied directly to voice rope editing are:
- CONCATENATE [VoiceRopeID$_1$, VoiceRopeID$_2$,...] - returns a new Voice ID, to produce a new VR that is the concatenation of existing Vr's;
- SUBSTRING [VoiceRopeID$_1$ Interval]- returns a new VoiceRopeID, to produce a new VR consisting of a specified interval of an existing VR;
- REPLACE [VoiceRopeID$_1$, Interval, VoiceRopeID$_2$] - returns a new VoiceRopeID, to produce a new VR having existing VoiceRopeID$_2$, substituted for a specified interval of existing VoiceRopeID$_1$, thereby performing a composition of the CONCATENATE and SUBSTRING operations; and
- LENGTH [VoiceRopeID] - returns a length, to determine the length of an existing VR in suitable units of time, such as milliseconds.

Typically, these operations are available via RPC calls to the voice manager 34.

Access controls may be superimposed on the VR's to control playback access to their underlying VF's and to limit editing of the VR's. These access control lists can contain names of individuals or groups. See Birrell et al., "Grapevine: An Exercise in Distributed Computing," Communications of the ACM, Vol. 25, No.4, April 1982, pp. 260-274. For example, such access controls may be established and changed at any time by the creator of a given VR by calling: PERMIT [VoiceRopeID, players, editors] to restrict access to the specified VR to the named players and the named editors. A suitable default setting for the access control mechanism would either provide unrestricted access to the VR or restrict the access to only its creator.

As will be appreciated, VR's have the important advantage that they can be shared by multiple users and can be incorporated into multiple standard textual documents to give authorized users access to the underlying VF's, without requiring that those data-intensive non-textual VF's be copied, moved or stored in multiple locations. Moreover, in accordance with an important feature of this invention, users are free to store documents containing VR's on-line or off-line as best suits their individual needs and desires.

To provide such user freedom, while ensuring that space on the file server 36 that is occupied by obsolete VF's is reclaimed in a timely manner, there is an interest based garbage collector for identifying and deleting obsolete VF's, as described in more detail hereinbelow. Preferably, these user interests are user- and class-specific, so that they can be generated and deleted automatically based on the ordinary directory operations of each user, with each user being responsible for uniquely identifying his/her own personal interest in a given class. For example, when a user enters a document containing a VR into his/her document directory or mail directory, a RPC may be initiated to register the user's interest in that VR in the voice manager 34 in the following form:

RETAIN [VoiceRopeID, class, interest, userID]

This procedure registers the interest of a specified user in a given VR by a given class (e.g., File Annotation or Message). This operation is idempotent, so successive calls with the same arguments register only one interest in a given voice rope. Additionally, there is a FORGET [VoiceRopeID, class, interest] procedure that is invoked, sometimes by an RPC issued to the voice manager 34 when the user deletes the document or message containing the VR from his/her directory (as opposed to moving it to another on-line or off-line directory), and other times as a result of a garbage collection process to be described below. Also, a LOOKUP [class, interest] procedure may be provided to return an unordered list of voice ropes associated with a particular interest to facilitate ordinary system administration functions.

Typically, the interest and class attributes of the user-invoked interest mechanism are arbitrary text string values. Preferably, however, the form of the interest value is class-specific, so that each class controls its own name space of interests through the use of a hierarchical, flat or other predetermined form of identifiers for its interest values. The class of an interest, on the other hand, usually identifies the way in which voice ropes are being used for a particular application. For example, a "FileAnnotation" class may be used to indicate that a document shared in a named file is annotated by a set of voice ropes, with the interest field being used to provide the file name. Likewise, a "Message" class may indicate that an electronic mail message references recorded voice, with the interest field containing the unique postmark that is supplied by the message system the particular mail message in which such reference is embedded.

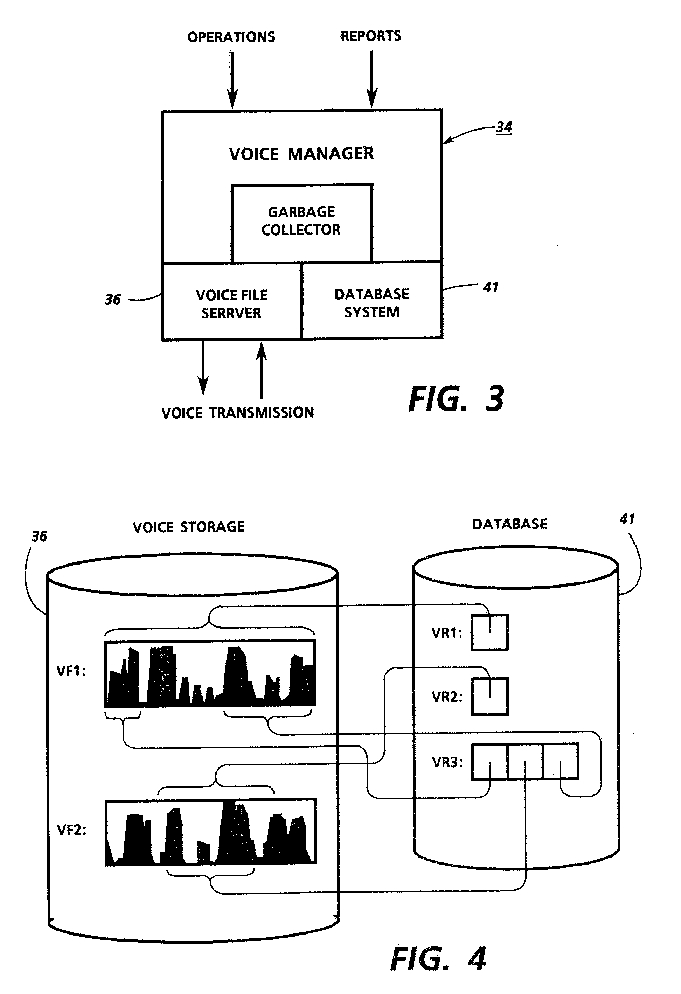

The voice manager 34 (Fig. 1) typically is logically layered as shown in Fig. 3 to provide a simple but robust facility for implementing the above-described voice rope editing features and for managing the user interests in such voice ropes and their underlying voice files. The voice file server 36 must be able to maintain a sustained data transfer rate of 64 kbits/sec for voice and to accommodate the playback of arbitrarily queued sequences of voice file intervals, with adequate buffering being provided to avoid perceptible pauses between successive sequences, but those requirements are relatively modest and easily satisfied given the present state of the art.

A simple database system 41 is provided to implement voice ropes and their related interests. To that end, the database system 41 stores the voice ropes (VR's) as immutable piece tables referencing immutable files and/or file segments, provides basic query and update capabilities, and supports sharing of the VR's among the many users that may employ them to reference the underlying voice files. Any database system that satisfies these modest requirements would suffice. For example, one such system stores each entry as a sequence of attributes expressed as key/value pairs in a write-ahead log, much as described by Gray, "Notes on Database Operating Systems" in Bayer et al., Operating Systems an Advanced Course, Springer-Verbig, 1978, pp. 393-481. However, unlike most database systems in which the data are logged only until they can be committed and written to a more permanent location, the write-ahead log within the database system 41 is the permanent source of the data (i.e., once written, the data are never moved). Thus, B-tree indices can be built by direct reference to the write-ahead log to map the values of one or more keys to the corresponding locations in the log files. Similar techniques have been employed to construct logs for electronic mail systems. See Donahue et al., "Walnut: Storing Electronic Mail in a Database," Xerox Palo Alto Research Center, Technical Report CSL-85-9, November 1985. Also see Lampson, "Hints for Computer System Design," Proceedings Ninth Symposium on Operating System Principles, Bretton Woods, New Hampshire, October 1983, pp. 33-48.

The minimum data structure for representing a voice rope consists of [VoiceFileID, key, interval] tuples. Additional attributes may be included for the VoiceRopeID, identity of the creator, access control lists, and overall length of the voice rope. This means that a typical database log entry for a voice rope may have the following form:

VoiceRopeID: Terry. pa#575996078
Creator: Terry. pa
Length: 80000
PlayAccess: VoiceProject ↑.pa
EditAccess: none
VoiceFileID:235
Key: 17401121062B 10300460457B
Interval: 0 80000

Such an entry can be used to construct an index that permits voice rope structures to be retrieved efficiently by their VoiceRopeID's. It also permits an index of VoiceFileID's to be maintained, which is useful for garbage collection as more fully described hereinbelow.

As will be recalled, more complex voice ropes can be constructed through the use of the aforementioned voice rope editing process. For example, as shown in Fig. 4, there may be two simple voice ropes, $VR_1$ and $VR_2$, having the following structures:

$VR_1$ = <VoiceFileID: $VF_1$, Key: $K_1$, Interval: [start: 0, length: 4000]>

$VR_2$ = <VoiceFileID: $VF_2$, Key: $K_2$, Interval: [start: 500, length: 2000]>

In that event, the operation;

REPLACE[base: $VR_1$, interval: [start: 1000, length: 1000], with: $VR_2$]

produces a new voice rope, $VR_3$, with the structure:

$VR_3$ = <VoiceFileID: $VF_1$, Key: $K_1$, Interval: [start: 0,length: 1000],

VoiceFileID: $VF_2$, Key: $K_2$, Interval: [start: 500, length: 2000]

VoiceFileID: $VF_1$, Key: $K_1$, Interval: [start: 2000, length: 2000]>

Briefly reviewing the management and editing of digitally recorded voice and other data-intensive non-textual data with which this invention may be utilized, it will be recalled that when voice is to be recorded the voice manager 34 calls on the voice file server 36 to create a new VF and to store the voice arriving over a specified conversation with a given conversationID as the contents of this new VF. Upon the completion of the recording, the voice manager 34 adds a simple VR to the voice rope database in the database system 41 to represent the newly recorded VF. The encryption key that was assigned by the voice control server 32 to encode the conversation is stored in the voice rope database entry, so this key is carried along with the VoiceFileID during all subsequent editing operation involving one or more intervals of the VR. The voice data file is neither moved nor copied once recorded in a $VF_1$, even during editing.

When playing a VR, the voice manager 34 first retrieves the VR's structure from the database system 41. If authenticated identities of all participants in the playback of the VR are consistent with any access controls associated with the VR, the voice manager 34 continues the playback process by distributing the encryption key or keys for the specified intervals of the VF's associated with the given VR to the participants and by causing the voice file server 36 to play those VF intervals in the appropriate order. As previously point out, the voice file server 36 preferably has a sufficiently large output buffer to enable two or more VF intervals to be played without introducing any pauses between them.

Advantageously, the VR's have a flat structure to enhance the playback performance (i.e., a single data base access is sufficient to determine the complete structure of a given VR because each VR directly refers to its associated VF's). Alternatively, complex VR's could be shared as intervals of other VR's in a tree-organized database having VR's representing intervals of VF's at the leaves of the tree. This approach would reduce the processing cost of editing VR's, but would increase the number of database accesses required to play complex VR's representing two or more specified intervals of the same or different VF's. In other words, there is a tradeoff to be made to optimize the VR database structure for a particular usage pattern.

As will be appreciated, once all VR's that reference a given VF have been deleted, no VR will ever again reference that particular VF, so the storage space on the voice file server 36 that is allocated to that VF advantageously is reclaimed for subsequent re-use by deleting the VF. A straightforward query of the voice rope database with the database system 41 is sufficient for determining whether there are any VR's still in existence that reference a given VF. However, it is more difficult to determine whether a given VR can be deleted or not. Thus, the above-described "interest" operations are the key to permitting automatic reclamation of VR's and their associated VF's.

Users are required to record their VR interests in a known place, such as in an interests database within the database system 41. These recorded interests then serve as proxies for the VR references which the user passes, thereby providing a logical basis for distinguishing between validly-referenced active VR's, and invalidly referenced or non-referenced, obsolete VR's. A reference-invalidation mechanism, such as a specified timeout period, may be incorporated into a properly-referenced interest if desired, so it is to be understood that VR obsolescence occurs when there are no existing valid references to the given VR (including unexpired timeouts).

It was previously pointed out that when a RETAIN procedure is called, an entry is added to the interest database, provided that the entry is not already there. This database entry includes the VoiceRopeID, the class of the interest, an interest value, and the user's identification, thereby permitting interest database queries based on any of those attributes. Unfortunately, it is sometimes impractical to modify existing workstations and file servers to call the RETAIN and its complementary FORGET procedures automatically to record and delete users' interests in a given VR when documents or message containing references to that VR are entered into and deleted from the users' directories. It is, however, feasible to incorporate into each user's operating system an additional program that is automatically invoked when the user moves a file containing a VR reference from temporary workstation storage to a file server for more permanent storage, whereby a call of the following type is issued for each voice rope referenced in such file: RETAIN[VRID: VoiceRopeID, Class "File Annotation", Interest: "Annotated File Name Name", User: Authenticated Name]

Thus at any later time, a standard file server directory enumeration operation can be performed to determine, for any given user interest, whether the user named instance of the file (e.g., "Annotated File Name") containing the VR reference to which the given interest pertains still exists or not. Each user's applications determine the class or classes of the interests registered by such user, and such interests are given user determined values (e.g., "Annotated File Name" for the "File Annotation" class of interests). This means that individual users are responsible for assigning unique values, such as different version numbers, to the different interests they may wish to record within a given class of interests.

For automatically locating and deleting obsolete interests from the interest database, the implementor of any interest class may register a procedure of the following type with the voice manager 34;
IS GARBAGE [VoiceRopeID, Interest] - {Yes/No}

This procedure determines in a class-specific manner whether or not a given interest still applies to a specific VR. For example, for the aforementioned File Annotation class, this procedure returns "YES" only if the user specified value of the interest parameter no longer exists on some file server somewhere within the distributed computing system 21.

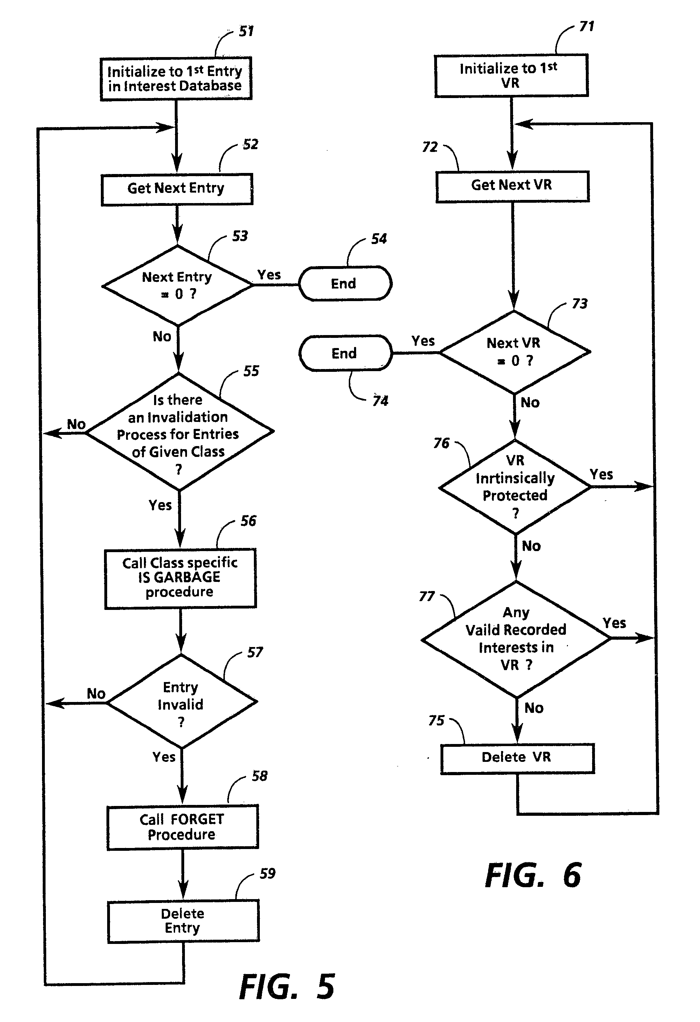

Suitably, as shown in Fig. 5, the voice manager 34 includes an interest verifier for periodically enumerating the database of interests, as at 51-54, and for calling the class-specific IS GARBAGE procedure (if one has been registered) for each interest, as at 55-56. The IS GARBAGE procedure for any class of interests may utilize various criteria for determining whether an entry within the given class is valid or not, as at 57. For example, the procedure may check the entry against intrinsic invalidation criteria, such as the expiration of a predetermined time-out period and consistency with an access control list. It also may issue a directory query to the file servers for the distributed computing system 21 to determine whether the interest value (e.g., "Annotated File Name") specified for the entry being examined still exists on one or more of the file servers. If the given interest is determined to be invalid for any reason, a FORGET [VoiceRopeID, class, interest] procedure is called, as at 58, to delete it from the database of interests, as at 59.

Referring to Fig. 6, the voice manager 34 also has a voice rope garbage collector for periodically enumerating the voice rope database, as at 71-74, so that orphaned VR's are deleted therefrom, as at 75. Desirably, provision is made for intrinsically protecting VR's of some or all classes, as at 76 at least for some finite period of time after they are created, so that interested users have a reasonable opportunity to register an interest in them. However, in the absence of such intrinsic protection, a given VR is deleted from the voice rope database, unless it is determined, as at 77, that the VR being examined is still referenced by at least one valid interest in the interest database.

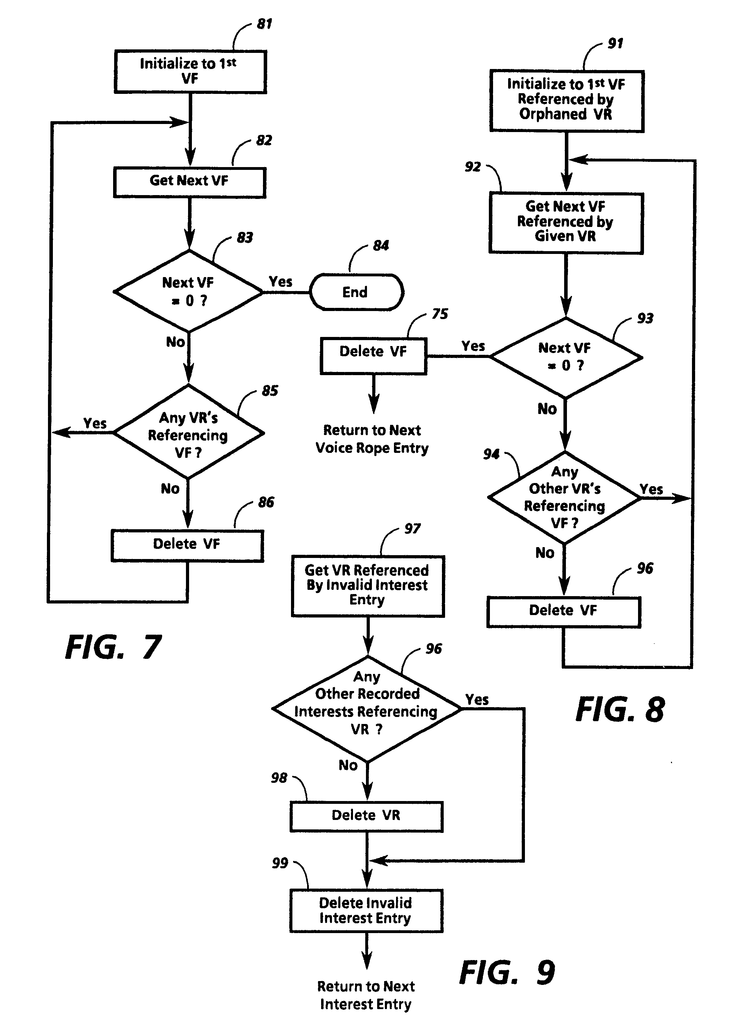

As shown in Fig. 7, a separate voice file garbage collector may be included in the voice manager 34 for periodically enumerating the voice file database, as at 81-84, so that those which are found as at 85, to no longer have any VR's referring to them are deleted, as at 86, thereby reclaiming the storage space on the voice file server 36 (Fig. 1) that was allocated to them.

Alternatively, however, as illustrated in Fig. 8, the voice file garbage collector may be integrated with the voice rope garbage collector, so that those functions are performed concurrently. For example, when it is determined that a given VR has been orphaned, as at 77 in Fig. 6, the VF's referenced by the orphaned VR can be enumerated, as at 91-93. That enables each of those VF's to be checked against the voice rope database to determine whether they are referenced by any other VR's, as at 94, so that orphaned VF's are deleted, as at 95. After all of the VF's referenced by an orphaned VR have been examined, the VR is deleted as at 75, and the process then loops back to continue the enumeration of the VR's with the next VR, as at 72 in Fig. 6.

Likewise, as shown in Fig. 9, the voice rope garbage collector may be integrated with the interest garbage collector. Each entry in the interest database refers to a single VR, so if it is determined that a given interest is invalid, as at 57 in Fig. 5, the interest database may be examined, as at 96 in Fig. 10, to determine whether it still contains other interests referencing the VR associated with the invalid interest, as at 97. If no other reference to the given VR is found, both the VR and the invalid interest entry are deleted, as at 98 and 99, respectively. On the other hand, if other interests referencing the VR exist, only the invalid interest is deleted before looping back to continue the enumeration of the interest database with the next interest, as at 52 in Fig. 5.

**Claims**

1. A hypermedia distributed computer system, including a communications medium (22), a plurality of workstations (24) coupled to the communications medium for enabling users to transfer digital textual data back and forth between the workstations, a file server (36) coupled to the communications medium for storing digital non-textual data files containing human-perceivable information; transducers located near at least some of the workstations, the transducers being coupled to the communications medium independently of the workstations, for enabling users to record non-textual data files on the file server and to playback such files subject to access authorization;
management means coupled to the file server and to the communications medium for allocating uniquely named storage space on the file server whenever a new non-textual data file is to be recorded thereon, and for determining the length of each of the files at the conclusion of its recording,
the management means including a database system having a reference database into which the management means makes a uniquely-named immutable entry whenever a new non-textual data file is recorded on the file server, with the entry referring to such file by name and length, and
the workstations including editing means for enabling users to manipulate the reference database entries to create additional uniquely named immutable entries for the reference database, with such additional entries referring to user-selected intervals of user-selected non-textual data files,
whereby the reference names may be embedded in textual data distributed to users to give users access to selected ones of the non-textual data files and selected parts of the files in arbitrarily specified order, without requiring that any of the non-textual data files be duplicated or moved.

2. The system of Claim 1, wherein the non-textual data files contain digitally-recorded sound, and
the transducers are sound transducers.

3. The system of Claim 2, wherein the non-textual data files are composed of digitized speech.

4. The system of Claim 3, wherein the speech is recorded on the file server in encrypted form, and wherein
users receiving references to the encrypted speech files are given all necessary keys for decrypting the speech files to which the references pertain, whereby decryption occurs only when the speech files are played back.

5. The system of any preceding Claim, wherein
the workstations include means for graphically representing the references to assist the users in editing them.

6. The system of Claims 3 and 5, wherein the non-textual data files are composed of digitized speech, and
the graphical representations distinguish between talkspurts and intervening gaps of predetermined minimum duration in the speech represented by the references.

FIG. 1

EP 0 315 425 A2

Clear ~~Recs~~ Get GetImpl PrevFile ~~Store~~ Save Time Split Places Levels (C) Log Voice
Find Word Def Position Normalize PrevPlace Reselect StyleKind
AddVoice PlayVoice STOP EditVoice DeleteVoice DictationMachine DeleteLinks

### 5.2 Voice viewers

The procedure outlined above is fine for short annotations, but for more complex annotations the user will need facilities to edit portions of voice. To keep things simple for rapid annotation, all that appeared in the text was an icon representing a complete voice utterance. To perform editing poerations, Sound Viewer #1 The user selects a region of text and buttons EditVoice. A *voice viewer* opens up for each voice icon within the selection. Each of the selected voice icons at this point changes its appearance to that of an *opened voice icon* - it now displays a number that identifies the corresponding voice viewer. Each voice viewer is labelled with its number, so that the user can easily see the associations between voice viewers and positions in text viewers.

Add Play STOP Save Store Redraw Mark DeleteMarks DictationMachine DictationOps

Intro                    Four score and seven years ago

Conclusion

## FIG. 2

OPERATIONS    REPORTS

VOICE MANAGER

GARBAGE
COLLECTOR

VOICE FILE
SERRVER

DATABASE
SYSTEM

34

36

41

VOICE TRANSMISSION

*FIG. 3*

VOICE STORAGE

DATABASE

41

36

VF1:

VF2:

VR1:

VR2:

VR3:

*FIG. 4*

*51*

Initialize to 1st Entry
in Interest Database

*52*

Get Next Entry

*53*

Next Entry
= 0 ? — Yes → End *54*

No

*55*

Is there
an Invalidation
Process for Entries
of Given Class
? — No →

Yes

*56*

Call Class specific
IS GARBAGE
procedure

*57*

Entry
Invalid
? — No →

Yes

*58*

Call FORGET
Procedure

*59*

Delete
Entry

**FIG. 5**

*71*

Initialize to 1st
VR

*72*

Get Next VR

*73*

End *74* ← Yes — Next VR
= 0 ?

No

*76*

VR
Inrtinsically
Protected
? — Yes →

No

*77*

Any
Vaild Recorded
Interests in
VR ? — Yes →

No

*75*

Delete VR

**FIG. 6**

**FIG. 7**

- 81 — Initialize to 1st VF
- 82 — Get Next VF
- 83 — Next VF = 0 ?
  - Yes → 84 — End
  - No ↓
- 85 — Any VR's Referencing VF ?
  - Yes →
  - No ↓
- 86 — Delete VF

**FIG. 8**

- 91 — Initialize to 1st VF Referenced by Orphaned VR
- 92 — Get Next VF Referenced by Given VR
- 93 — Next VF = 0 ?
  - Yes → 75 — Delete VF → Return to Next Voice Rope Entry
  - No ↓
- 94 — Any Other VR's Referencing VF ?
  - Yes →
  - No ↓
- 96 — Delete VF

**FIG. 9**

- 97 — Get VR Referenced By Invalid Interest Entry
- 96 — Any Other Recorded Interests Referencing VR ?
  - Yes →
  - No ↓
- 98 — Delete VR
- 99 — Delete Invalid Interest Entry

Return to Next Interest Entry